# EUROPÄISCHE PATENTSCHRIFT

(11) **EP 1 336 052 B1**
(45) Veröffentlichungstag und Bekanntmachung des Hinweises auf die Patenterteilung: **16.11.2005**
(21) Anmeldenummer: 01997651.3
(22) Anmeldetag: 26.09.2001
(51) Int. Cl.: F16C 35/063

(54) **LAGER ZUR FIXIERUNG EINER LENKWELLE**
BEARING FOR LOCATING A STEERING SHAFT
PALIER DE FIXATION D'UN ARBRE DE DIRECTION

(30) Priorität: 24.11.2000 DE 10058491
(43) Veröffentlichungstag der Anmeldung: 20.08.2003
(73) Patentinhaber: INA-Schaeffler KG, 91074 Herzogenaurach (DE)
(72) Erfinder: WEISSKOPF, Ulrike, 91086 Aurachtal (DE); LUTZ, Rainer, 91459 Markt Erlbach (DE); WEISS, Jürgen, 71229 Leonberg (DE)
(86) Internationale Anmeldenummer: PCT/EP2001/011103
(87) Internationale Veröffentlichungsnummer: WO 2002/042655

(56) Entgegenhaltungen:
- DE-A- 2 450 580
- DE-A- 2 451 531
- DE-A- 4 229 199
- DE-C- 4 007 941
- GB-A- 417 398
- GB-A- 1 019 138
- US-A- 1 909 230
- US-A- 5 085 548
- US-A- 5 462 369

## Beschreibung

### Anwendungsgebiet der Erfindung

Die Erfindung betrifft ein Lager zur Fixierung einer Lenkwelle in einem Gehäuse mit wenigstens einem Lageraußenring, mit einem auf der Lenkwelle angeordneten Lagerinnenring, zwischen denen auf zugehörigen Laufbahnen Wälzkörper abrollen, wobei der Lagerinnenring auf der Lenkwelle zumindest in einer Richtung gegen axiales Verschieben gesichert ist.

### Hintergrund der Erfindung

Derartige Lageranordnungen dienen zur Fixierung einer Lenkwelle in einem Lenkgehäuse in einem Fahrzeug und sind in den verschiedensten Ausführungen bekannt. So ist beispielsweise in der technischen Produktinformation "Wälzlager und Komponenten für KFZ-Fahrwerke" der INA Wälzlager Schaeffler oHG auf Seite 14 eine Lenkwellenlagerung dargestellt, bei der ein Kugellager und ein davon beabstandet angeordnetes Nadellager eine Lenkwelle in einem Gehäuse fixieren. Die eingesetzten Lager müssen dabei die Lenkwelle spielfrei abstützen, wirksam Geräusche und Schwingungen dämpferi, eine hohe Steifigkeit aufweisen und möglichst reibungsarm sein. Eine weitere wesentliche Forderung ist sicherheitstechnischer Art. Im Crashfall ist vorgeschrieben, dass beim Frontalaufprall der Verschiebeweg der Lenkwelle in den Fahrgastraum sehr eng begrenzt ist. Dazu müssen die Lager fest auf der Lenkwelle verankert und gegen axialen Verschieben gesichert sein. Die Kräfte, die im Crashfall aufgefangen werden müssen, liegen bei etwa 11.000 N. Das in Bild 17 der vorstehend genannten Produktinformation gezeigte obere Lager ist auf der Lenkwelle durch zwei Schultern in axialer Richtung gegen Verschieben gesichert. Diese Schultern sind durch zwei zusätzliche Teile gebildet, die beide auf die Lenkwelle aufgepresst sind und den Innenring des oberen Wälzlagers beidseitig an seinen Stirnflächen umfassen. Diese Fixierungsart des Lagers weist also eine relativ große Anzahl von Teilen auf. Jedes der einzelnen Teile benötigt Werkzeuge für die Fertigung sowie für die Montage. Die axiale Fixierung des Lagers ist somit aufwendig und verursacht hohe Kosten.

### Zusammenfassung der Erfindung

Aufgabe der Erfindung ist es daher, ein Lager zur Fixierung einer Lenkwelle in einem Gehäuse zu schaffen, bei dem der Aufwand für die Fertigung und Montage reduziert sind. Es ist weiter Aufgabe der Erfindung, eine besonders einfache und wirkungsvolle axiale Sicherung des Lagers zu erreichen.

Erfindungsgemäß wird diese Aufgabe nach dem kennzeichnenden Teil von Anspruch 1 dadurch gelöst, dass der Lagerinnenring in wenigstens einer axialen Richtung im Anschluss an die Laufbahn mit einer angeformten zylindrischen Verlängerung versehen und mit dieser Verlängerung auf die Lenkwelle aufgepresst ist, wobei in der zylindrischen Verlängerung Durchbrüche angeordnet sind, über die ein Sicherungsring formschlüssig in eine Nut der Lenkwelle eingreift.

Durch die Kombination von Aufpressen des Lagerinnenringes auf die Lenkwelle mit Einschnappen des Sicherungsringes in die Nut der Lenkwelle ist diese in optimaler Weise gegen axiales Verschieben gesichert, so dass sie im Crashfall nicht in den Fahrgastraum eindringen kann. Die Handhabung und Montage einer solchen kompakten Lagerbaueinheit ist ebenfalls erleichtert, da der Sicherungsring in den Innenring eingeschnappt ist und so beim Transport bis zum Verbauen beim Kunden unverlierbar am Lager gehalten ist.

Weitere vorteilhafte Ausbildungen der Erfindung sind in den Unteransprüchen 2 bis 5 beschrieben.

So ist nach Anspruch 2 vorgesehen, dass das Lager ein spielfreies Vierpunktkugellager ist, dessen Lagerinnenring ein spanlos geformtes Bauteil ist, der in beiden axialen Richtungen im Anschluss an die Laufbahn die angeformte zylindrische Verlängerung aufweist, wobei der Lagerinnenring im Bereich der Laufbahn einen lichten Durchmesser aufweist, der über dem lichten Durchmesser der zylindrischen Verlängerungen liegt. Bei dieser Gestaltung des Lagers ist besonders von Vorteil, dass beim Aufpressen des Lagerinnenrings auf die Lenkwelle dessen Laufbahn nicht beschädigt werden kann, da das Aufpressen über die angeformten zylindrischen Verlängerungen erfolgt.

Nach Anspruch 3 soll der Lageraußenring von zwei durch einen Spalt voneinander beabstandeten Teillaufbahnen bildenden Laufringteilen zusammengesetzt sein, die über elastische Einlageringe abgestützt von einer Hülse mit radial nach innenweisenden Borden aufgenommen sind.

In Anspruch 4 ist die Gestaltung des Sicherungsringes näher beschrieben. Danach soll dieser aus einem Federstahl gefertigt sein, einen Schlitz aufweisen und in Umfangsrichtung abwechselnd aufeinanderfolgende Bereiche unterschiedlicher radialer Ausdehnung aufweisen, wobei die Bereiche kleiner radialer Ausdehnung in die Nut eingreifen und die Bereiche größerer radialer Ausdehnung auf dem Lagerinnenring aufsitzen. Diese Form sorgt dafür, dass die Montage wesentlich erleichtert ist, da sich ein solcher Ring in einfacher Weise handhaben lässt. Durch die umfangsmäßige Ausdehnung von Bereichen mit kleinerem Radius und Bereichen mit größerem Radius lässt sich auch nochmals auf die Verschiebekraft der Lenkwelle im Crashfall reagieren.

Schließlich ist nach Anspruch 5 vorgesehen, dass der Sicherungsring in Umfangsrichtung wenigstens bei gleichmäßig abwechselnd aufeinanderfolgende Bereiche unterschiedlicher radialer Ausdehnung aufweist.

Die Erfindung wird an nachstehendem Ausführungsbeispiel näher erläutert.

### Kurze Beschreibung der Zeichnungen

Es zeigen:
- Figur 1: die Lagerung einer Lenkwelle im Bereich des Lenkrades nach dem bisherigen Stand der Technik,
- Figur 2: einen Längsschnitt durch den Innenring eines erfindungsgemäßen Lenkungslagers,
- Figur 3: einen Querschnitt entlang der Linie III-III in Figur 2,
- Figur 4: einen Längsschnitt durch ein komplettes erfindungsgemäßes Lager und
- Figur 5: eine Draufsicht auf einen Sicherungsring.

### Ausführliche Beschreibung der Zeichnungen

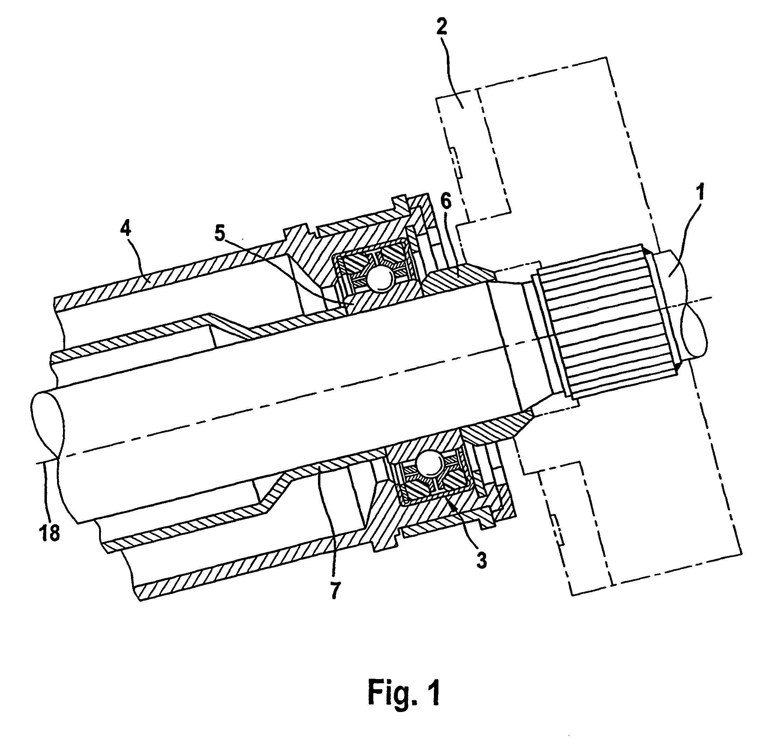

Nach dem bisherigen Stand der Technik ist die um ihre Achse 18 drehbare Lenkwelle 1, die das Lenkrad 2 mit einem Lenkgetriebe verbindet, über zwei voneinander beabstandete Wälzlager gehalten, wobei in Figur 1 nur das obere Lager 3 gezeigt ist. Dieses stützt die Lenkwelle 1 im Gehäuse 4 ab, wobei der Lagerinnenring 5 auf der Lenkwelle 1 gegen axiales Verschieben durch die beiden Bauteile 6, 7 gesichert ist. Während das Bauteil 6 als ein massiver Sicherungsring ausgebildet ist, ist das Bauteil 7 als eine Hülse konzipiert, die entlang ihrer axialen Erstreckung einen unterschiedlichen Durchmesser aufweist. Sowohl Bauteil 6 als auch Bauteil 7 sind so auf die Lenkwelle 1 aufgepresst, so dass der Innenring 5 des Lagers 3 an seinen beiden Stirnseiten fest umschlossen ist. Es liegt auf der Hand, dass eine solche axiale Fixierung des Lagers 3 auf der Lenkwelle 1 über die zusätzlichen Bauteile 6 und 7 sehr aufwändig und damit teuer ist.

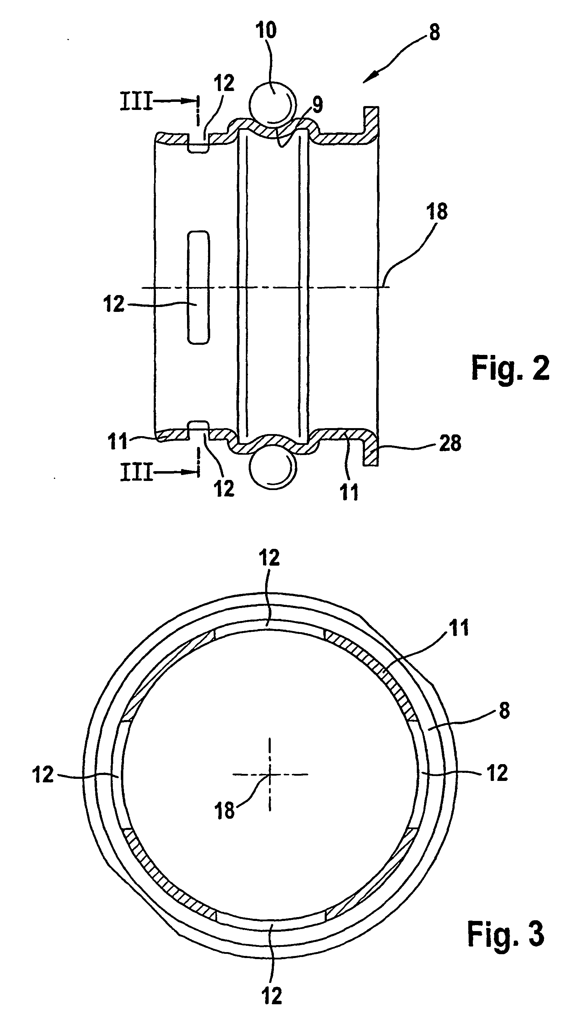

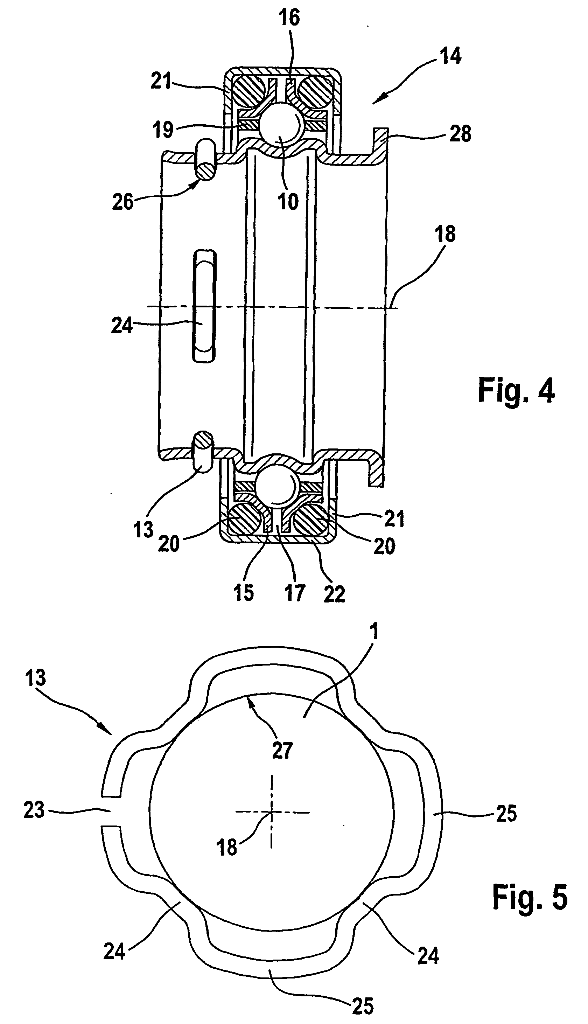

Das Wesentliche der Erfindung ist in den Figuren 2, 3, 4 und 5 dargestellt. Danach ist der rechtsseitig mit dem Flansch 28 versehene Innenring 8 des Lagers 3 ein spanlos geformtes Bauteil, der in beiden axialen Richtungen im Anschluss an die Laufbahn 9 der Lagerkugeln 10 die angeformten zylindrischen Verlängerungen 11 aufweist, wobei der lichte Durchmesser der zylindrischen Verlängerungen 11 kleiner als der lichte Durchmesser des Lagerinnenringes 8 im Laufbahnbereich 9 ist. Der Lagerinnenring 8 ist auf die Lenkwelle 1 aufgepresst, wobei bedingt durch den unterschiedlichen Durchmesser der Festsitz durch die zylindrischen Verlängerungen 11 realisiert ist. Diese werden beim Aufpressen auf die Lenkwelle 1 im elastischen Bereich verformt. Eine Beschädigung des Laufbahnbereichs 9 beim Aufpressen des Innenringes 8 ist somit in vorteilhafter Weise vermieden. Wie die Figuren weiter zeigen, ist die linksseitig angeordnete zylindrische Verlängerung 11 des Innenringes 8 mit vier gleichmäßig voneinander beabstandeten Durchbrüchen 12 versehen, in die der in Figur 5 dargestellte Sicherungsring 13 eingeschnappt ist. Auf diese Weise ist der Lagerinnenring 8 auf der Lenkwelle 1 sowohl kraft- als auch formschlüssig gehalten.

Wie bereits ausgeführt, liegt das Wesentliche der Erfindung in der Gestaltung des Lagerinnenringes 8 und dessen Fixierung auf der Lenkwelle 1. Die übrige Gestaltung des Lagers hingegen kann variieren. Gemäß Figur 4 ist es als ein spielfreies Vierpunktlager 14 ausgebildet, dessen Lageraußenring durch zwei Laufringteile 15, 16 gebildet ist, die durch den Spalt 17 in Richtung der Achse 18 voneinander beabstandet sind. Die im Käfig 19 geführten Lagerkugeln 10 besitzen daher zwei nicht näher bezeichnete Außenlaufbahnen. Die beiden Laufringteile 15, 16 nehmen mit ihrer offenen Seite je einen elastischen Einlagering 20 auf und werden gemeinsam von radialen nach innen gerichteten Borden 21 der Hülse 22 umfasst, so dass eine unverlierbare Baueinheit gebildet ist. Andere mögliche Ausführungsvarianten bezüglich der Gestaltung des Lageraußenringes passend zum erfindungsgemäß ausgebildeten Lagerinnenring gehen beispielsweise aus der DE 40 03 052 A1, DE 41 14 643 C2, DE 42 29 199 A1 und der DE 42 24 992 A1 hervor.

Aus der Figur 5 ist erkennbar, dass der mit dem Schlitz 23 versehene Sicherungsring 13 in der Draufsicht betrachtet von der Kreisform abweicht, d. h. in Umfangsrichtung abwechselnd aufeinanderfolgende Bereiche 24, 25 unterschiedlicher radialer Ausdehnung aufweist. Vier Bereiche 24 kleinerer radialer Ausdehnung umschließen jeweils vier Bereiche 25 größerer radialer Ausdehnung bzw. umgekehrt, wobei die Bereiche 24 in die in der Lenkwelle 1 vorhandenen Nut 26 eingreifen und aufgrund der Federwirkung an deren Nutgrund 27 fest anliegen. Die radial größeren Bereiche 25 sitzen auf der äußeren Mantelfläche des Lagerinnenringes 8 im Bereich der zylindrischen Verlängerung 11 auf. Je nach anfallender auf die Lenkwelle 1 wirkender axialer Verschiebekraft lässt sich in einfacher Weise die umfangsmäßige Ausdehnung der Bereiche 24 realisieren. Je größer die axiale Verschiebekraft, desto größer sollten auch die Bereiche 24 in ihrer umfangsmäßigen Ausdehnung sein.

### Bezugszeichen

- 1: Lenkwelle
- 2: Lenkrad
- 3: Lager
- 4: Gehäuse
- 5: Lagerinnenring
- 6: Bauteil
- 7: Bauteil
- 8: Lagerinnenring
- 9: Laufbahn
- 10: Wälzkörper
- 11: zylindrische Verlängerung
- 12: Durchbruch
- 13: Sicherungsring
- 14: Vierpunktlager
- 15: Laufringteil
- 16: Laufringteil
- 17: Spalt
- 18: Achse
- 19: Käfig
- 20: Einlagering
- 21: Bord
- 22: Hülse
- 23: Schlitz
- 24: Bereich
- 25: Bereich
- 26: Nut
- 27: Nutgrund
- 28: Flansch

## Patentansprüche

1. Lager (3) zur Fixierung einer Lenkwelle (1) in einem Gehäuse (4) mit wenigstens einem Lageraußenring, mit einem auf der Lenkwelle (1) angeordneten Lagerinnenring, zwischen denen auf zugehörigen Laufbahnen (9) Wälzkörper (10) abrollen, wobei der Lagerinnenring auf der Lenkwelle (1) zumindest in einer Richtung gegen axiales Verschieben gesichert ist, **dadurch gekennzeichnet, dass** der Lagerinnenring (8) wenigstens in einer axialen Richtung im Anschluss an die Laufbahn (9) mit einer angeformten zylindrischen Verlängerung (11) versehen und mit dieser Verlängerung (11) auf die Lenkwelle (1) aufgepreßt ist, wobei in der zylindrischen Verlängerung (11) Durchbrüche (12) angeordnet sind, über die ein Sicherungsring (13) formschlüssig in eine Nut (26) der Lenkwelle (1) eingreift.

2. Lager (3) nach Anspruch 1, **dadurch gekennzeichnet, dass** es als ein spielfreies Vierpunktkugellager (14) ausgebildet ist, dessen Lagerinnenring (8) ein spanlos geformtes Bauteil ist, der in beiden axialen Richtungen im Anschluss an die Laufbahn (9) die angeformten zylindrische Verlängerungen (11) aufweist, wobei der Lagerinnenring (8) im Bereich der Laufbahn (9) einen lichten Durchmesser aufweist, der über dem lichten Durchmesser der zylindrischen Verlängerungen (11) liegt.

3. Lager (3) nach Anspruch 2, **dadurch gekennzeichnet, dass** der Lageraußenring aus zwei durch einen Spalt (17) voneinander beabstandeten Teillaufbahnen bildenden Laufringteilen (15,16) zusammengesetzt ist, die über elastische Einlageringe (20) abgestützt von einer Hülse (22) mit radial nach innen weisenden Borden (21) aufgenommen sind.

4. Lager (3) nach Anspruch 1, **dadurch gekennzeichnet, dass** der Sicherungsring (13) aus einem Federstahl gefertigt ist, einen Schlitz (23) aufweist und in Umfangsrichtung abwechselnd aufeinanderfolgende Bereiche (24,25) unterschiedlicher radialer Ausdehnung besitzt, wobei die Bereiche kleinerer radialer Ausdehnung (24) in die Nut (26) eingreifen und die Bereiche größerer radialer Ausdehnung (25) auf dem Lagerinnenring (8) aufsitzen.

5. Lager (3) nach Anspruch 4, **dadurch gekennzeichnet, dass** der Sicherungsring (13) in Umfangsrichtung wenigstens drei gleichmäßig abwechselnd aufeinanderfolgende Bereiche unterschiedlicher radialer Ausdehnung (24,25) aufweist.

## Claims

1. Bearing (3) for fixing a steering shaft (1) in a housing (4), having at least one bearing outer ring, having a bearing inner ring which is arranged on the steering shaft (1), between which rolling bodies (10) roll on associated raceways (9), the bearing inner ring being secured on the steering shaft (1) at least in one direction against axial displacement, **characterized in that** the bearing inner ring (8) is provided with an integrally formed cylindrical extension (11) at least in one axial direction, in a manner which adjoins the raceway (9), and is pressed onto the steering shaft (1) with this extension (11), apertures (12) being arranged in the cylindrical extension (11), via which apertures (12) a securing ring (13) engages with a form-fitting connection into a groove (26) of the steering shaft (1).

2. Bearing (3) according to Claim 1, **characterized in that** it is configured as a play-free four-point ball bearing (14), the bearing inner ring (8) of which is a component which has been formed without cutting and has the integrally formed cylindrical extensions (11) in both axial directions, in a manner which adjoins the raceway (9), the bearing inner ring (8) having an inside diameter in the region of the raceway (9) which lies above the inside diameter of the cylindrical extensions (11).

3. Bearing (3) according to Claim 2, **characterized in that** the bearing outer ring is composed of two raceway ring parts (15, 16) which form part raceways spaced apart from one another by a gap (17) and which are held via resilient insert rings (20) in a manner which is supported by a sleeve (22) with radially inwardly pointing flanges (21).

4. Bearing (3) according to Claim 1, **characterized in that** the securing ring (13) is manufactured from a spring steel, has a slot (23) and has regions (24, 25) of different radial extent which follow one another alternately in the circumferential direction, the regions of smaller radial extent (24) engaging into the groove (26) and the regions of greater radial extent (25) being seated on the bearing inner ring (8).

5. Bearing (3) according to Claim 4, **characterized in that**, in the circumferential direction, the securing ring (13) has at least three regions of different radial extent (24, 25) which follow one another in a uniformly alternating manner.

## Revendications

1. Palier (3) pour la fixation d'un arbre de direction (1) dans un carter (4), avec au moins une bague de palier extérieure, avec une bague de palier intérieure disposée sur l'arbre de direction (1), entre lesquelles roulent des corps de roulement (10) sur des chemins de roulement associés (9), la bague de palier intérieure étant fixée sur l'arbre de direction (1) au moins dans une direction pour empêcher un déplacement axial, **caractérisé en ce que** la bague de palier intérieure (8) est pourvue au moins dans une direction axiale, à la suite du chemin de roulement (9), d'une prolongation cylindrique (11) moulée et est pressée avec cette prolongation (11) sur l'arbre de direction (1), des orifices (12) étant prévus dans la prolongation cylindrique (11), par le biais desquels une bague de fixation (13) vient en prise par engagement positif dans une rainure (26) de l'arbre de direction (1).

2. Palier (3) selon la revendication 1, **caractérisé en ce qu'**il est réalisé en tant que palier à billes à quatre points sans jeu (14), dont la bague de palier intérieure (8) est un composant façonné sans enlèvement de copeaux, qui présente, dans les deux directions axiales, à la suite du chemin de roulement (9), les prolongations (11) cylindriques moulées, la bague de palier intérieure (8) présentant dans la région du chemin de roulement (9) un diamètre intérieur qui est supérieur au diamètre intérieur des prolongations cylindriques (11).

3. Palier (3) selon la revendication 2, **caractérisé en ce que** la bague de palier extérieure se compose de deux parties de bague de roulement (15, 16) formant des chemins de roulement partiels espacés l'un de l'autre par une fente (17), qui sont supportées par des bagues d'insertion élastiques (20) et sont reçues par une gaine (22) avec des bords (21) tournés radialement vers l'intérieur.

4. Palier (3) selon la revendication 1, **caractérisé en ce que** la bague de fixation (13) est fabriquée en acier à ressort, présente une fente (23) et possède des régions successives (24, 25) alternant dans la direction périphérique, d'extension radiale différente, les régions d'extension radiale inférieure (24) venant en prise dans la rainure (26) et les régions d'extension radiale supérieure (25) reposant sur la bague de palier intérieure (8).

5. Palier (3) selon la revendication 4, **caractérisé en ce que** la bague de fixation (13) présente dans la direction périphérique au moins trois régions successives alternant uniformément d'extension radiale différente (24, 25).
